# EUROPÄISCHE PATENTANMELDUNG

(11) **EP 4 480 801 A1**
(43) Veröffentlichungstag der Anmeldung: **25.12.2024**
(21) Anmeldenummer: 23180224.0
(22) Anmeldetag: 20.06.2023
(51) Int. Cl.: B62K 19/08, B62K 19/10, B62K 19/34, B62M 6/55

(54) **MODULARES FAHRRADGESTELL FÜR EIN PEDELEC**

(71) Anmelder: Diavelo Schweiz AG, 8005 Zürich (CH)
(72) Erfinder: Sauerbeck, Sebastian, 77815 Bühl (DE); Vogelsanger, Karin, 8124 Maur (CH)
(74) Vertreter: Durm Patentanwälte PartG mbB

(57) **Zusammenfassung**

Ein modulares Fahrradgestell (100) für ein Pedelec (10) oder E-Bike mit einer Antriebseinheit (12) mit Motor (26), umfasst eine Zentralkomponente (200), eine Radtraverse (400) zur Aufnahme eines Rads des Pedelecs (10), eine Unterstrebe (300) mit einem Steuerrohr (320) am freien Ende (310) zur Halterung eines Steuersatzes (20) für eine Gabel (18) und einen Vorbau, wobei die Radtraverse (400) lösbar und starr an einem Aufnahmebereich (230) der Zentralkomponente (200) verbunden ist und die Unterstrebe (300) lösbar und starr an einem Befestigungsbereich (220) der Zentralkomponente (200) verbunden ist. Die Zentralkomponente (200) hat zwei beabstandete Seitenbleche (210), einen Motorträger (280), einen Querverbinder (260), eine Querstrebe (240) und einen Querträger (250), die gemeinsam die Seitenbleche (210) in einem vorgegebenen Abstand fixieren. Die Erfindung betrifft die Zentralkomponente selbst sowie ein Pedelec (10) mit einem modularen Fahrradgestell (100).

## Beschreibung

Die vorliegende Erfindung betrifft eine Zentralkomponente für ein modulares Fahrradgestell für ein Pedelec oder ein E-Bike, wobei die Zentralkomponente zum Aufnehmen und Halten einer Antriebseinheit mit Motor des Pedelecs ausgebildet ist. Die Erfindung betrifft weiter ein modulares Fahrradgestell für ein Pedelec mit einer derartigen Zentralkomponente, eine Unterstrebe für ein modulares Fahrradgestell, eine Radtraverse für ein modulares Fahrradgestell sowie eine Lasttraverse.

Pedelecs und E-Bikes sind Fahrräder mit einer Antriebseinheit mit einem Motor, bei denen der Fahrer in seiner manuellen Trittbewegung durch den als Hilfsmotor ausgeprägten Antrieb unterstützt wird. Der Motor erleichtert dem Fahrer die Fortbewegung des Rads, sodass weitere Strecken oder größere Steigungen zurückgelegt werden können. Ebenso dient der Motor zur Unterstützung beim Transport schwererer Lasten. Aus diesem Grund werden Pedelecs oder auch E-Bikes auch gerne als Lastenräder eingesetzt oder für den Transport von Kindern. Hierbei sind Fahrräder bekannt, deren Gepäckträger so ausgebildet ist, dass ein oder zwei Kinder hintereinander auf einer Sitzbank oder in Kindersitzen auf dem Gepäckträger transportiert werden können. Bei manchen Fahrrädern ist der Gepäckträger so ausgebildet, dass eine Kombination aus Kindersitz und Gepäckaufnahme möglich ist. Derartige Pedelecs oder E-Bikes werden in zwei unterschiedlichen Versionen angeboten, in einer Kurzversion mit kurzem Radstand und in einer Langversion (Longtail) mit langem Radstand und verlängertem Gepäckträger.

Eine Änderung der Fahrradkonfiguration ist jedoch nicht möglich. So müssen sich Käufer bereits vor dem Kauf entscheiden, ob sie eine Langversion oder eine Kurzversion eines Fahrrads anschaffen wollen. Die Hersteller müssen also zwei komplett unterschiedliche Versionen vorhalten, da sich die Fahrradrahmen deutlich unterscheiden.

Nicht nur bei der Unterscheidung zwischen Langversion und Kurzversion eines Fahrrad- oder Pedelec-Modells müssen einzelne Rahmen vorgehalten werden. Auch jede andere Änderung oder Spezifizierung eines Fahrradtyps führt zu einem eigenen Rahmenmodell, beispielsweise wenn unterschiedliche Rahmengrößen gefordert sind oder unterschiedliche Neigungen des Steuerrohrs, um ein komfortableres oder sportlicheres Fahrrad oder Pedelec zu schaffen. Dies führt zu einer Vielzahl von unterschiedlichen Rahmen, die der Hersteller vorhalten muss, da Änderungen der Konfiguration nicht möglich sind.

Hiervon ausgehend besteht bei den Herstellern von Fahrrädern oder Pedelecs folglich der Bedarf, die Anzahl der vorzuhaltenden Rahmen zu reduzieren und dennoch eine Individualisierung insoweit zu schaffen, dass unterschiedliche Anforderungsprofile erfüllt werden können.

Gelöst wird die vorliegende Aufgabe durch eine Zentralkomponente für ein modulares Fahrradmodell mit den Merkmalen des Anspruchs 1, durch ein modulares Fahrradgestell mit den Merkmalen des Anspruchs 9, durch eine Unterstrebe für ein modulares Fahrradgestell mit den Merkmalen des Anspruchs 13, durch eine Radtraverse für ein modulares Fahrradgestell mit den Merkmalen des Anspruchs 15, durch eine Lasttraverse mit den Merkmalen des Anspruchs 18 sowie durch ein modulares Fahrradgestell mit einer elektrischen Antriebseinheit mit Motor mit den Merkmalen des Anspruchs 20.

Im Rahmen der Erfindung wurde erkannt, dass durch eine Abkehr des Aufbaus der Fahrräder mit einem zentralen Rahmen, der entsprechend den jeweiligen Anforderungen des Fahrrads und den Wünschen des Fahrers festgelegt ist, eine größere Flexibilität möglich ist. Hierzu wurde erkannt, dass die Aufgabe des in der Regel mit Rohren aufgebauten Fahrradrahmens und der Ersatz durch ein modulares Fahrradgestell zu der gewünschten Wirkung führt. Basis des modularen Fahrradgestells ist hierbei eine Zentralkomponente, die dazu ausgebildet und eingerichtet ist, eine Antriebseinheit mit einem Motor des Pedelecs aufzunehmen und zu halten.

In einem ersten Aspekt betrifft die Erfindung somit eine Zentralkomponente für ein modulares Fahrradgestell eines Pedelecs oder E-Bikes. Die erfindungsgemäße Zentralkomponente umfasst zwei beabstandete Seitenbleche mit einem Befestigungsbereich zur Befestigung einer Unterstrebe, die die Funktion eines Unterrohrs eines Fahrradrahmens hat, und mit einem Aufnahmebereich zur Aufnahme und Befestigung einer Radtraverse, an der ein Hinterrad aufgenommen werden kann. Die Zentralkomponente umfasst weiter ein Sitzrohr, das sich teilweise zwischen die Seitenbleche erstreckt und mit diesen verbunden ist und in dessen oberes Ende eine Sattelstütze einführbar ist.

Die Zentralkomponente weist weiter einen Querverbinder auf, der bevorzugt im oberen Bereich der Seitenbleche angeordnet ist. Der Querverbinder verbindet die beiden Seitenbleche und fixiert sie in einem vorgegebenen Abstand zueinander und erhöht so die Stabilität der Zentralkomponente.

Die Zentralkomponente hat einen Motorträger zum Tragen der Antriebskomponente des Pedelecs, die insbesondere den Motor umfasst, aber meistens auch das Tretwerk mit Tretkurbel und Tretlager. Der Motorträger kann durch einfache Aufnahmen oder Befestigungsvorrichtungen, z. B. an den Seitenblechen, gebildet sein, sodass die Antriebskomponente oder der Antriebsmotor direkt oder mittels Zwischenstücks mit den Seitenblechen verbunden ist. Der Motorträger ist bevorzugt einstückig. Er ist bevorzugt mit den beiden Seitenblechen verbunden und trägt die Antriebskomponente oder Teile davon.

Bevorzugt ist der Querverbinder im oberen Bereich der Seitenbleche der Zentralkomponente angeordnet.

Die Zentralkomponente weist bevorzugt neben dem Querverbinder eine Querstrebe im Befestigungsbereich und einen Querträger im Aufnahmebereich auf. Der Querverbinder, die Querstrebe und der Querträger verbinden die beiden Seitenbleche und fixieren sie in einem vorgegebenen Abstand zueinander und erhöhen so die Stabilität der Zentralkomponente. Der Befestigungsbereich und der Aufnahmebereich der Zentralkomponente weisen jeweils Befestigungselemente auf, um die Unterstrebe bzw. die Radtraverse lösbar und starr zu befestigen.

Das Zusammenspiel aus Seitenblechen, Sitzrohr, Motorträger, Querverbinder und bevorzugt Querstrebe und Querträger führt zu einer sehr stabilen Zentralkomponente, die gleichzeitig sehr kompakt aufgebaut ist. Die so gebildete Zentralkomponente ist die Basis eines modularen Fahrradgestells. An ihr werden die weiteren Anbauteile bzw. Modulteile des Fahrradgestells angebaut. Auf diese Weise ist eine große Flexibilität gegeben, da die einzelnen Anbauteile wie Unterstrebe und Radtraverse individualisierbar sind und einzelnen, spezifischen Anforderungen angepasst sein können. Die Zentralkomponente ist jedoch bei allen individualisierten Ausführungen des Fahrradgestells gleich und unverändert, sodass diese in großer Stückzahl und damit sehr preisgünstig hergestellt werden kann.

Die Verbindung der einzelnen Teile der Zentralkomponente wird durch eine unlösbare Verbindung realisiert, beispielsweise durch Zusammenschweißen der einzelnen Teile. Besonders bevorzugt sind alle Teile der Zentralkomponente aus Metall, sehr bevorzugt aus Aluminium, aus Stahl oder einer Stahllegierung. Ein Verschweißen der Einzelteile ist dann einfach möglich.

Querverbinder, Querstrebe und Querträger können alle oder einige beispielsweise aus Verbindungsrohren, Verbindungsblechen oder Verbindungstraversen o. ä. gebildet werden.

Die Befestigungselemente im Befestigungsbereich und im Aufnahmebereich können beispielsweise durch Muttern, Gewinde, Gewindestücke, Bohrungen, Löcher, Gewindebohrungen oder Klebeflächen realisiert sein, sodass eine lösbare und starre Verbindung der Unterstrebe und der Radtraverse mit der Zentralkomponente möglich ist.

In einer bevorzugten Ausführungsform wird der Querverbinder durch ein Deckblech gebildet, das die Seitenbleche in einem Bereich ihrer Oberseite bevorzugt mindestens teilweise abdeckt oder bündig mit ihnen abschließen kann. Das Deckblech kann bevorzugt so ausgebildet und angeordnet sein, dass es auch mit dem Sitzrohr der Zentralkomponente verbunden sein kann. Hierdurch wird die Stabilität der Zentralkomponente weiter erhöht. Gleichzeitig wird durch das Deckblech ein Schutz des Inneren der Zentralkomponente erzielt. Zudem wird eine Verletzungsgefahr durch die Schmalseiten der Seitenbleche reduziert. Bevorzugt ist das Deckblech ebenfalls aus Metall, sodass es mit den Seitenblechen verschweißt sein kann.

Eine bevorzugte Ausführungsform der Zentralkomponente umfasst ein Batteriehalteelement zum Halten und Befestigen einer Batterie des Pedelecs. Das Batteriehalteelement oder der Batteriehalter hat bevorzugt die Form eines Halteblechs. Der Batteriehalter oder das Halteblech kann parallel zum Sitzrohr angeordnet sein. Beispielsweise kann das Batteriehalteelement oder das Halteblech mit dem Sitzrohr verbunden sein, bevorzugt verschweißt. Ebenso ist es möglich, dass das Batteriehalteelement auch mit den beiden Seitenteilen verbunden ist und somit zwischen die beiden Seitenteile hineinragt. Hierdurch wird die Stabilität der Zentralkomponente weiter erhöht. Da die Zentralkomponente in diesem Bereich bevorzugt offen ist, kann eine von dem Batteriehalteelement gehaltene Batterie ebenfalls in die Zentralkomponente, also zwischen die beiden Seitenbleche, hineinragen, wenn sie von dem Batteriehalter gehalten wird. Damit lassen sich zum einen die Anschlüsse der Batterie (elektrische Anschlüsse) in die Zentralkomponente integrieren. Batteriestecker sind dann geschützt. Zudem können die beiden Seitenbleche der Zentralkomponente als Führung und zur zusätzlichen Stabilisierung der Position der Batterie dienen.

In einer bevorzugten Ausführungsform der Zentralkomponente weisen die Seitenbleche im Aufnahmebereich einen Aufweitungsbereich auf, sodass der Abstand der Seitenbleche im Aufweitungsbereich größer ist als der Abstand im Befestigungsbereich. Der Aufnahmebereich dient zur Befestigung der Radtraverse. Um bei einem Pedelec mit Mittelmotor, der von der Zentralkomponente gehalten wird, das Motormoment auf das Hinterrad zu übertragen, ist ein Kettenantrieb oder ein Riemenantrieb notwendig. Für eine geeignete Führung des Riemens oder der Kette ist es positiv, wenn die Radtraverse nahe des Motors verbreitert ist. Entsprechend umfasst der Aufnahmebereich den verbreiterten Aufweitungsbereich.

Der Aufweitungsbereich kann dabei zwei Abschnitte umfassen, wobei das freie Ende des Aufweitungsbereichs so ausgebildet ist, dass das Seitenblech in diesem Abschnitt bevorzugt parallel zu dem Befestigungsbereich ausgebildet ist. Der dazwischen liegende Teil des Aufweitungsbereich ist ein abgewinkelter Bereich. Der Aufweitungsbereich kann durch zwei Abkantungen des Seitenblechs hergestellt werden.

Eine weitere bevorzugte Ausführungsform umfasst ein Zwischenblech, das zwischen den Seitenblechen angeordnet ist und diese verbindet und das sich zwischen dem Motorträger und dem Aufweitungsbereich erstreckt. Das Zwischenblech ist mit den Seitenblechen verbunden bzw. verschweißt und erhöht die Stabilität der Zentralkomponente zusätzlich. Des Weiteren kann es so angeordnet sein, dass es mit dem Motorträger verbunden ist und mit ihm gemeinsam die Zentralkomponente nach unten abschließt. Hierdurch kann beispielsweise ein Aufnahmeraum für eine Batterie des Pedelecs gebildet werden. Des Weiteren ist das Zwischenblech auch geeignet, um einen Ständer (Fahrradständer) aufzunehmen und zu halten. Bevorzugt ist das Zwischenblech in der Nähe des Schwerpunkts des Fahrradgestells oder des Pedelecs oder bevorzugt kurz hinter dem Schwerpunkt angeordnet und ist deshalb besonders geeignet für eine Krafteinleitung des Fahrradständers.

In einer weiteren bevorzugten Ausführungsform ist die Zentralkomponente so ausgebildet, dass der Motorträger die Seitenbleche teilweise an ihre Unterseite, also an der unteren Schmalseite, abdeckt. Bevorzugt ist der Motorträger mit den Seitenblechen verschweißt, sodass eine stabile Verbindung gebildet wird, die die Gesamtstabilität der Zentralkomponente erhöht. Der Motorträger kann sich dabei zwischen den beiden Seitenblechen erstrecken. Er ist in der Regel für den später zu verbauenden Motor des Pedelecs spezifisch ausgebildet und dient somit quasi als Adapter zwischen Antriebseinheit bzw. Antriebsmotor und Zentralkomponente. Die Seitenbleche können unabhängig von dem verwendeten Motor gestaltet sein. Die Form der Seitenbleche und die der anderen Teile der Zentralkomponente können standardisiert werden. Somit ist eine Massenherstellung möglich, die das Bauteil insgesamt preisgünstig macht.

Vorzugsweise ist die Zentralkomponente aus Metall, besonders bevorzugt aus Aluminium. Die verwendeten Bleche, insbesondere die Seitenbleche, haben eine Stärke von wenigstens 1,5 Millimetern, bevorzugt von wenigstens 2 Millimetern und weiter bevorzugt von wenigstens 2,5 Millimetern. Besonders bevorzugt ist eine Stärke der Bleche, insbesondere der Seitenbleche, von wenigstens 3 Millimetern, sehr bevorzugt von wenigstens 5 Millimetern und weiter bevorzugt von wenigstens 7 Millimetern. Die Stärke der verwendeten Bleche der Zentralkomponente beträgt dabei höchstens 10 Millimeter, bevorzugt höchstens 8 Millimeter und besonders bevorzugt höchstens 6 Millimeter. Sehr bevorzugt liegt die Stärke der Bleche im Bereich zwischen 3 Millimetern und 6 Millimetern. Beispielsweise ist es möglich, die Seitenbleche in 6 Millimetern Stärke auszubilden, während beispielsweise das optionale Deckblech oder das optionale Zwischenblech in 3 Millimetern oder 4 Millimetern Stärke ausgebildet sein kann.

In einem weiteren Aspekt betrifft die Erfindung ein modulares Fahrradgestell für ein Pedelec oder ein E-Bike mit einer Antriebseinheit mit Motor. Das modulare Fahrradgestell umfasst erfindungsgemäß eine Zentralkomponente mit zwei beabstandeten, im Wesentlichen parallelen Seitenblechen, die je einen Befestigungsbereich zur Befestigung einer Unterstrebe und einen Aufnahmebereich zur Aufnahme und zum Befestigen einer Radstrebe aufweisen. Die Zentralkomponente des Fahrradgestells hat ein Sitzrohr zur Aufnahme einer Sattelstange für einen Sattel, einen Motorträger zur Aufnahme der Antriebseinheit und/oder eines Antriebsmotors, einen Querverbinder und optional eine Querstange und einen Querträger, wobei Querverbinder, optionale Querstange und Querträger gemeinsam die Seitenbleche in einem vorgegebenen Abstand fixieren. Die Zentralkomponente kann beispielsweise so ausgebildet sein, wie oben beschrieben wurde.

Das modulare Fahrradgestell umfasst weiter eine Radtraverse zur Aufnahme eines Rads des Pedelecs und eine Unterstrebe. Die Radtraverse umfasst einen Aufnahmeabschnitt zum Befestigen an dem Aufnahmebereich der Zentralkomponente. Die Radtraverse hat einen sich an den Aufnahmeabschnitt anschließenden Strebenabschnitt mit einer Kettenstrebe.

Die Unterstrebe hat ein Steuerrohr an ihrem freien Ende zur Halterung eines Steuersatzes für eine Gabel und einen Vorbau eines Lenkers.

Die Radtraverse und die Unterstrebe sind lösbar und starr mit der Zentralkomponente verbunden, die Radtraverse mit dem Aufnahmebereich, die Unterstrebe mit dem Befestigungsbereich der Zentralkomponente. Somit lässt sich aus den drei Teilen (Modulen) Zentralkomponente, Radtraverse und Unterstrebe ein modulares Fahrradgestell für ein Pedelec oder E-Bike aufbauen, bei dem die einzelnen Teile (Module) starr miteinander verbunden sind. Da die Einzelteile (Module) lösbar verbunden sind, ist eine Individualisierung und Anpassung des modularen Fahrradgestells an unterschiedliche Anforderungen möglich. Durch Änderung oder Austausch der Radtraverse allein lässt sich beispielsweise ein anderer Radstand des Pedelecs realisieren. Unterstrebe und Zentralkomponente bleiben dabei unverändert. So lässt sich einfach eine Kurzversion (Shorttail) in eine Langversion (Longtail) umgestalten und umgekehrt.

Durch ein einfaches Auswechseln der Unterstrebe kann eine andere Konstellation des Fahrradgestells erzielt werden, beispielsweise ein größerer Abstand zwischen Sattel und Lenker, sodass eine Individualisierung für unterschiedliche Körpergrößen von Fahrern möglich ist.

Da die Radtraverse und die Unterstrebe jeweils an den Seitenblechen der Zentralkomponente verbunden werden, ist es vorteilhaft, wenn Unterstrebe und Radtraverse ebenfalls aus Blechen gebildet sind. Beispielsweise kann die Unterstrebe vorzugsweise aus einem mehrfach abgekanteten Blech gebildet sein, das bevorzugt an seiner Unterseite offen ist. Die Radtraverse kann ebenfalls durch ein mehrfach abgekantetes Blech gebildet werden, das entsprechend Individualisierungswünschen oder spezifischen Anforderungen, wie Lastentragfähigkeit, ausgebildet sein kann. Alternativ ist es möglich, dass die Radtraverse aus mehreren miteinander verbundenen Blechen gebildet wird.

Das Fahrradgestell ist folglich vorwiegend aus Blechen, insbesondere Metallblechen, aufgebaut, die abgekantet oder abgewinkelt sind. Die Bleche bilden offene oder jedenfalls teilweise offene Strukturen. Auf Rohre, wie sie von anderen Fahrradrahmen bekannt sind, wird verzichtet.

In einer bevorzugten Ausführungsform umfasst der Strebenabschnitt der Radtraverse neben der Kettenstrebe auch eine Sitzstrebe und eine Heckstrebe, die in ihrem unteren Bereich mit der Kettenstrebe verbunden sind. Bevorzugt umfasst der Strebenabschnitt der Radtraverse eine Oberstrebe, die bevorzugt mit der Sitzstrebe und der Heckstrebe in deren oberem Bereich verbunden ist. Durch die Verwendung mehrerer Streben lässt sich zum einen das Gewicht der Radtraverse reduzieren, zum anderen die Stabilität erhöhen. Dabei können Individualisierungen vorgenommen werden, indem die einzelnen Streben unterschiedlich stark oder breit ausgebildet sind. Die Streben der Radtraverse können einstückig miteinander verbunden sein, beispielsweise können sie miteinander verschweißt sein. Es ist auch denkbar, dass die Strebenkonstruktion der Radtraverse durch Ausstanzungen eines Vollblechs hergestellt ist.

In einer bevorzugten Ausführungsform umfasst das Fahrradgestell zusätzlich eine Lasttraverse, die mit der Zentralkomponente im Befestigungsbereich lösbar und starr verbunden ist. Bevorzugt ist die Lasttraverse auch mit der Radtraverse verbunden, besonders bevorzugt mit der Oberstrebe der Radtraverse.

Beispielsweise lässt sich die Radtraverse aus zwei seitlichen Traversenteilen herstellen, die an ihrer Oberseite mit der Lasttraverse verbunden werden, wodurch eine zusätzliche Stabilität der Radtraverse erzielt wird. Radtraverse und Lasttraverse können miteinander verschraubt werden, sodass sie ausgetauscht und einzelne Teile oder Module im Fall von Beschädigungen ersetzt oder getauscht werden können. Denkbar ist es jedoch auch, dass die Traversenteile starr miteinander verbunden sind, beispielsweise durch Verschweißen.

In einem weiteren Aspekt betrifft die vorliegende Erfindung eine Unterstrebe für ein modulares Fahrradgestell. Die Unterstrebe hat ein Steuerrohr an ihrem freien Ende zur Halterung eines Steuersatzes für eine Gabel und einen Vorbau eines Lenkers. Die Unterstrebe ist dazu ausgebildet und eingerichtet, mit einer Zentralkomponente verbindbar zu sein, beispielsweise mit einer oben beschriebenen Zentralkomponente. Die Unterstrebe hat einen Befestigungsabschnitt mit zwei beabstandeten, bevorzugt im Wesentlichen parallelen Befestigungsblechen. Der Befestigungsabschnitt korrespondiert mit einem Befestigungsbereich einer Zentralkomponente, beispielsweise der oben beschriebenen, derart, dass eine starre und lösbare Befestigung der Unterstrebe an der Zentralkomponente möglich ist.

Die Unterstrebe wird durch ein mehrfach abgekantetes Blech gebildet, das bevorzugt aus Metall, aus einer Metalllegierung oder aus Aluminium besteht. Das Blech ist derart abgekantet, dass zwei im Wesentlichen parallel angeordnete Unterstreben-Seitenbleche und ein sich dazwischen erstreckendes Unterstrebendach gebildet werden. Die derart abgekantete Unterstrebe ist an ihrer Unterseite offen, jedenfalls teilweise offen. Dies ermöglicht beispielsweise einen ausreichenden Raum für eine Kabelführung für elektrische Kabel, eine Leitungsführung für Schaltleitungen oder Bremsleitungen oder für Bremsdrähte.

In einer bevorzugten Ausführungsform der Unterstrebe kann in ihrem offenen Bereich ein Unterstreben-Querverbinder vorgesehen sein, der die Formstabilität der Unterstrebe erhöht. Bevorzugt kann der Unterstreben-Querverbinder ein abgekantetes Formstück sein, beispielsweise ein Blech oder ein mehrfach abgewinkeltes Blech, oder ein oder mehrere Rohre oder Traversen umfassen, die die Unterstreben-Seitenbleche derart verbinden, dass der Abstand der Unterstreben-Seitenbleche fixiert ist. Selbstverständlich können mehrere Unterstreben-Querverbinder vorgesehen sein.

In einem weiteren Aspekt umfasst die vorliegende Erfindung eine Radtraverse für ein modulares Fahrradgestell, beispielsweise ein Fahrradgestell wie oben beschrieben. Die Radtraverse ist dazu ausgebildet, das Rad eines Pedelecs oder E-Bikes zu lagern. Die Radtraverse umfasst einen Aufnahmeabschnitt zum Befestigen an einem Aufnahmebereich einer Zentralkomponente, bevorzugt einer oben beschriebenen Zentralkomponente. Die Radtraverse hat einen sich an den Aufnahmeabschnitt anschließenden Strebenabschnitt mit einer Kettenstrebe, wobei bevorzugt die Kettenstrebe ein Lager für die Achse des Rads aufweist.

Die Radtraverse kann aus einem mehrfach abgekanteten Blech gebildet sein, wobei beispielsweise das Blech so abgewinkelt und abgekantet ist, dass zwei Radtraversen-Seitenteile gebildet werden, die im Wesentlichen parallel verlaufen. Der Querschnitt der Radtraverse hat dann die Form eines auf dem Kopf stehenden Us.

In einer bevorzugten Ausführungsform ist der Strebenabschnitt der Radtraverse mit Kettenstrebe Teil eines (einzelnen) Blechs, wobei bevorzugt im Strebenabschnitt wenigstens eine Öffnung oder Ausnehmung vorgesehen ist, sodass bevorzugt mehrere Streben gebildet werden. Die Streben können beispielsweise durch Ausstanzungen entstehen. Möglich ist auch, dass das Blech (Metallblech) mehrere kleinere Löcher oder Öffnungen aufweist, wodurch zum einen eine hohe Stabilität erzielt, zum anderen Gewicht gespart wird. Gleichzeitig kann durch diese Art oder eine Perforierung des Blechs ein "Rockschutz" oder Speichenschutz gebildet werden, damit beispielsweise mitfahrende Kinder oder Teile der Kleidung nicht in die Speichen des Pedelecs greifen bzw. gelangen können.

In einer bevorzugten Ausführungsform umfasst der Strebenabschnitt der Radtraverse eine Sitzstrebe und eine Heckstrebe, die bevorzugt miteinander verbunden sind und vorzugsweise gemeinsam in ihrem unteren Bereich mit der Kettenstrebe verbunden sind. Vorzugsweise hat die Radtraverse eine Oberstrebe, die bevorzugt mit der Sitzstrebe und der Heckstrebe in deren oberem Bereich verbunden ist. Auf diese Weise lässt sich eine relativ leichte, aber stabile Radtraverse bzw. ein Radtraversen-Seitenteil bilden.

Vorzugsweise ist die Heckstrebe der Radtraverse V-förmig ausgebildet. Bevorzugt ist die Basis der V-förmigen Heckstrebe mit der Kettenstrebe verbunden, sehr bevorzugt einstückig verbunden.

In einer ebenfalls bevorzugten Ausführungsform weisen die Elemente der Radtraverse bzw. die Radtraverse selbst eine horizontal verlaufende Abwinkelung oder Abkantung auf. Dieser horizontale "Knick" führt zu einer Verbesserung der Formstabilität. Zudem dient er dazu, die lichte Weite im unteren Bereich der Radtraverse, also bevorzugt zwischen zwei korrespondierenden Kettenstreben zweier Radtraversen bzw. Radtraversen-Seitenteile, an die lichte Weite im oberen Bereich der Radtraverse anzupassen und Differenzen zu überbrücken. Die lichten Weiten unterscheiden sich standardmäßig. Die lichte Weite im unteren Bereich ist standardisiert für das Hinterrad inkl. Bremsen und Schaltung. Gleiches gilt für die lichte Weite im oberen Bereich, die sich für Gepäckträger und deren Adapter nach bekannten Maßen von Adaptersystemen von Kindersitzen o. ä. richtet.

In einer ebenfalls bevorzugten Ausführungsform ist die Radtraverse einstückig ausgebildet, bevorzugt aus einem mehrfach abgekanteten Blech. Alternativ und ebenfalls bevorzugt kann die Radtraverse aus zwei korrespondierenden Radtraversen-Seitenteilen gebildet sein, die in ihrem oberen Ende direkt oder unter Zwischenschaltung eines Verbindungselements miteinander verbunden sind. Hierdurch wird die Steifigkeit und Stabilität der Radtraversen-Seitenteile erhöht.

Ein weiterer Aspekt der vorliegenden Erfindung betrifft eine Lasttraverse für ein modulares Fahrradgestell. Die Lasttraverse umfasst einen Verbindungsabschnitt zum lösbaren und starren Befestigen an einem Befestigungsbereich einer Zentralkomponente und einen Trägerabschnitt zum Befestigen an einem oberen Ende einer Radtraverse. Die Lasttraverse kann bevorzugt aus einem Blech gebildet sein, das im Trägerabschnitt mehrfach abgekantet sein kann und das bevorzugt nach unten wenigstens teilweise offen sein kann. Die Lasttraverse kann also beispielsweise das oben beschriebene Verbindungselement sein, das zwei korrespondierende Radtraversen-Seitenteile in deren oberem Bereich miteinander verbindet, sodass eine stabile und starre Hinterrad-Aufhängekonstellation gebildet wird.

In einer bevorzugten Ausführungsform umfasst die Lasttraverse einen Aufnahmebügel, der im Trägerabschnitt der Lasttraverse angeordnet ist. Bevorzugt überragt der Aufnahmebügel den Trägerabschnitt nach hinten, also weg vom Verbindungsabschnitt. Vorzugsweise ist der Aufnahmebügel an der Unterseite einer eine Last aufnehmenden Trägerplatte der Lasttraverse angeordnet. Der Aufnahmebügel ist mit der Lasttraverse verbunden, beispielsweise verschweißt, sodass die Stabilität der Lasttraverse weiter erhöht werden kann.

Bevorzugt weist die Lasttraverse im Trägerabschnitt, etwa im Bereich der Abkantungen, wenigstens eine Aufnahmeöffnung derart auf, dass der Aufnahmebügel in der Aufnahmeöffnung zugänglich ist. Vorzugsweise sind mehrere Aufnahmeöffnungen vorgesehen. Auf diese Weise lassen sich beispielsweise Adapter von Fahrradtaschen oder Gepäckcontainern an dem Aufnahmebügel befestigen, sodass weitere Lasten mittels Fahrradtaschen oder anderen Behältnissen einfach und komfortabel transportiert werden können.

Das erfindungsgemäße Fahrradgestell zeichnet sich dadurch aus, dass die meisten der Komponenten aus abgekanteten, abgewinkelten oder gebogenen Blechen bestehen. Durch diese Abwinkelung wird eine hohe Stabilität erreicht. Die Unterstrebe und die Lasttraverse sind an ihrer Unterseite bevorzugt jeweils offen. Die Radtraverse kann an ihrer Unterseite ebenfalls offen sein, sofem sie einstückig ausgebildet ist. Alternativ kann sie aus zwei korrespondierenden und im Wesentlichen spiegelbildlichen Radtraversen-Seitenteilen aufgebaut sein. Diese können über die Achse des gehaltenen Hinterrads miteinander verbunden sein. Um die Stabilität zu erhöhen, können an der Oberseite der Radtraverse weitere Verbindungen (z. B. Streben o. ä.) vorgesehen sein.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: ein Pedelec mit einem modularen Fahrradgestell;
- Figuren 2a bis d: eine Zentralkomponente des Fahrradgestells aus Figur 1;
- Figuren 3a und: b eine Unterstrebe des Fahrradgestells aus Figur 1;
- Figuren 4a und: b eine Radtraverse eines modularen Fahrradgestells;
- Figuren 5a bis c: ein Radtraversen-Seitenelement im Detail;
- Figuren 6a bis c: eine weitere Ausführungsform einer Radtraverse;
- Figuren 7a bis c: eine Lasttraverse in unterschiedlichen Ansichten;
- Figur 8: eine Detailzeichnung des modularen Fahrradgestells; und
- Figuren 9a und b: unterschiedliche Ausführungen eines Pedelecs mit modularem Fahrradgestell.

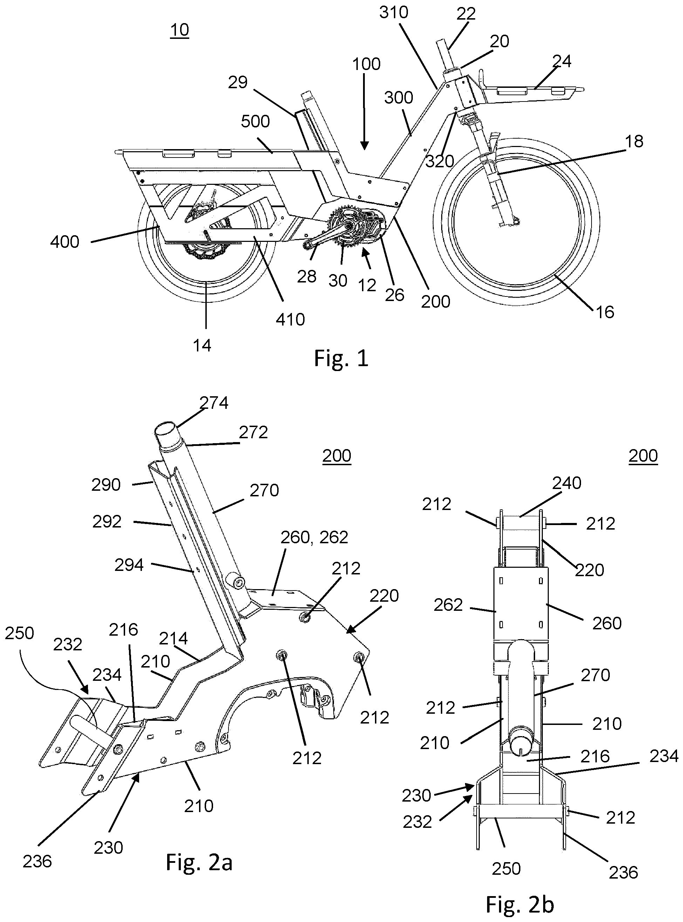

Figur 1 zeigt ein Fahrrad bzw. Pedelec 10 in Seitenansicht, mit einem modularen Fahrradgestell 100, mit einer Antriebseinheit 12, einem Hinterrad 14, einem Vorderrad 16, das von einer Gabel 18 gehalten wird. Die Gabel 18 ist in einem Steuersatz 20 gehalten, an dessen oberem Ende eine Lenkerstange bzw. ein Vorbau 22 angedeutet ist. Der zu dem Fahrrad 10 gehörende Lenker ist ebenso wenig gezeigt wie der Sattel mit Sattelstange, die in einem Sitzrohr gelagert ist.

Das modulare Fahrradgestell 100 umfasst eine Zentralkomponente 200, eine Unterstrebe 300, die die Funktion eines Unterrohrs eines Fahrradrahmens hat und an deren freiem Ende 310 ein Steuerrohr 320 integriert ist, in dem der Steuersatz 20 gehalten wird. Das Fahrradgestell 100 umfasst weiter eine Radtraverse 400 mit einer Kettenstrebe 410, an der das Hinterrad 14 gehalten wird. Am oberen Ende der Radtraverse ist eine Lasttraverse 500 angeordnet, die mit der Radtraverse verbunden ist und eine Verbindung zur Zentralkomponente 200 hat.

Das Pedelec 10 bzw. E-Bike umfasst weiter einen Frontgepäckträger 24, der optional ist und mit dem freien Ende 310 der Unterstrebe 300 (bevorzugt lösbar) verbunden ist.

Die Antriebseinheit 12, die an der Zentralkomponente 200 befestigt ist, weist neben einem Motor 26 eine Tretkurbel 28 und ein damit verbundenes Kettenblatt 30 auf, an dem eine nicht gezeigte Kette geführt wird, mit der das Hinterrad 14 angetrieben wird.

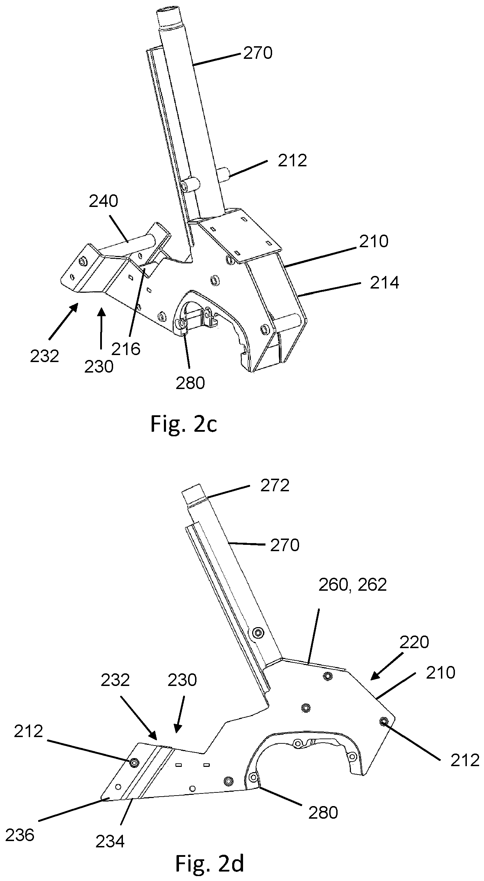

Die Figuren 2a bis d zeigen die Zentralkomponente 200, die das zentrale Teil des Fahrradgestells 100 ist. Während die Figuren 2a und 2c perspektivische Ansichten der Zentralkomponente 200 zeigen, ist in Figur 2b eine Draufsicht und in Figur 2d eine Seitenansicht gezeigt.

Die Zentralkomponente 200 umfasst zwei Seitenbleche 210, die parallel zueinander angeordnet sind. Die beiden Seitenbleche 210 sind spiegelsymmetrisch und korrespondieren miteinander. Jedes der Seitenbleche 210 hat einen Befestigungsbereich 220, der dazu ausgebildet ist, dass die Unterstrebe 300 mit dem Seitenblech 210 verbunden werden kann. Hierzu sind mehrere Befestigungselemente 212 vorgesehen, an denen die Unterstrebe 300 befestigt, bevorzugt angeschraubt werden kann.

Am entgegengesetzten Ende der Seitenbleche 210 ist ein Aufnahmebereich 230 ausgebildet, der zur Aufnahme und zum Befestigen einer Radtraverse 400 dient. Zwischen den beiden Seitenblechen 210 sind Verbindungselemente angeordnet, die eine Querstrebe 240 im Befestigungsbereich 220, einen Querträger 250 im Aufnahmebereich 230 und einen Querverbinder 260 im oberen Bereich der Seitenbleche umfassen. Der Querverbinder 260 ist als Deckblech 262 ausgebildet und liegt bevorzugt auf einer Oberseite 214 der Seitenbleche 210 auf. Die Oberseite 214 wird dabei durch die obere Schmalseite der Seitenbleche 210 gebildet. Die Ausbildung des Querverbinders 260 als Deckblech 262 ist optional. Alternativ kann der Querverbinder 260 beispielsweise auch als Strebe, Stab, Traverse, Bolzen oder Rohr ausgebildet sein, wie es in dem hier gezeigten Beispiel für die Querstrebe 240 und den Querträger 250 der Fall ist.

Im Aufnahmebereich 230 der Seitenbleche 210 ist ein Aufweitungsbereich 232 vorgesehen, in dem die Seitenbleche 210 nach außen abgewinkelt sind. Der Aufweitungsbereich wird durch zweimaliges Abkanten der Seitenbleche 210 erzeugt, wobei in einem Übergangsabschnitt 234 die Seitenbleche nach außen geformt sind, während an einem sich anschließenden Tragabschnitt 236 die beiden Seitenbleche 210 wieder parallel verlaufen. Der Aufweitungsbereich führt nicht nur zu einer höheren Stabilität der Seitenbleche 210, er erleichtert auch das Anbringen der Radtraverse 400 und die Anordnung einer das Kettenblatt 30 und Hinterrad 14 verbindenden Kette oder eines Riemens.

Da der Abstand zwischen den beiden Seitenblechen 210 im Tragabschnitt 236 größer ist als in den anderen Teilen (Abschnitten) der Seitenbleche 210, ist der Querträger 250, der beispielsweise als Rohr, Stempel oder Stößel ausgebildet sein kann, länger als beispielsweise die Querstrebe 240.

Die Zentralkomponente 200 weist ein Sitzrohr 270 auf, das sich nach oben weg erstreckt. Das Sitzrohr 270 ragt zwischen die beiden Seitenbleche 210 hinein und ist mit ihnen verbunden. Bevorzugt ist das Sitzrohr 270 an den Seitenblechen angeschweißt, gegebenenfalls unter Zuhilfenahme von Verbindungsstücken oder Distanzmuffen. Am oberen Ende 272 des Sitzrohrs ist eine Sattelstütze 274 angeordnet, in die eine Sattelstange eines Sattels eingeführt werden kann. Das Sitzrohr 270 ist nach hinten, also in Richtung Aufnahmebereich, geneigt, sodass eine bessere Sitzposition für den Fahrer des Fahrrads oder Pedelecs 10 erzielt werden kann. An dem Sitzrohr 270 können zusätzliche Befestigungselemente 212 vorgesehen sein, die angeformte oder angeschweißte Bolzen oder Rohre mit Innengewinde sein können. Sie können beispielsweise als zusätzlicher Befestigungspunkt für die Lasttraverse 500 dienen.

Am unteren Bereich der Seitenbleche 210 und in Verlängerung des Sitzrohrs 270 ist an der Zentralkomponente 200 ein Motorträger 280 angeordnet, der die Antriebseinheit 12 mit dem Motor 26 aufnimmt und trägt. Der Motorträger ist (hersteller-)spezifisch für die Antriebseinheit bzw. für den verwendeten Motor ausgebildet. In der hier gezeigten Form deckt er die Unterkante der Seitenbleche 210 ab, sodass die Seitenbleche 210 auf dem Motorträger 280 aufliegen. Der Motorträger selbst ist in seiner Form und mit seinen Aufnahmeelementen bzw. Anschraubhalterungen spezifisch ausgebildet. Da der Motorträger 280 mit beiden Seitenblechen 210 verbunden ist, wird hierdurch die Stabilität der Zentralkomponente weiter erhöht. Darüber hinaus kann sich das Sitzrohr bis zu dem Motorträger 280 erstrecken und an diesem zusätzlich fixiert, beispielsweise angeschweißt, sein. Auch dies erhöht die Stabilität der Zentralkomponente. Selbstverständlich ist es denkbar, dass der Motorträger lediglich an den Innenseiten der beiden Seitenbleche befestigt ist und von den Seitenblechen 210 in einer seitlichen Ansicht, wie in Figur 2d, nicht sichtbar ist.

Die Zentralkomponente 200 umfasst weiter ein Batteriehalteelement 290 oder einen Batteriehalter 292, um eine in Figur 1 dargestellte Batterie 29 des Pedelecs 10 zu halten. Der Batteriehalter 292 ist als Halteblech 294 ausgebildet und erstreckt sich parallel zu dem Sitzrohr 270. In der hier dargestellten Ausführungsform ist das Batteriehalteelement 290 mit dem Sitzrohr 270 verbunden. An seinem unteren Ende ist das Halteblech zusätzlich mit den beiden Seitenblechen 210 verbunden, beispielsweise verschweißt, was zur Verbesserung der Stabilität der Zentralkomponente 200 beiträgt und deren Steifigkeit erhöht.

Um die Stabilität der Zentralkomponente 200 weiter zu erhöhen, kann optional ein Zwischenblech 216 zwischen den beiden Seitenblechen 210 eingefügt und mit ihnen verbunden werden. Das Zwischenblech 216 erstreckt sich zwischen dem Motorträger 280 und dem Aufweitungsbereich 232. Das Zwischenblech 216 kann mit dem Motorträger 280 Teil eines Batterieaufnahmeraums sein, die sich entlang des Batteriehalteelements 290 in den zwischen den beiden Seitenblechen 210 gebildeten Raum erstrecken kann.

Die Zentralkomponente 200 ist bevorzugt aus Metallblechen und Metallelementen gebildet. Diese sind miteinander verbunden, vorzugsweise miteinander verschweißt, sodass eine einstückige Zentralkomponente gebildet wird.

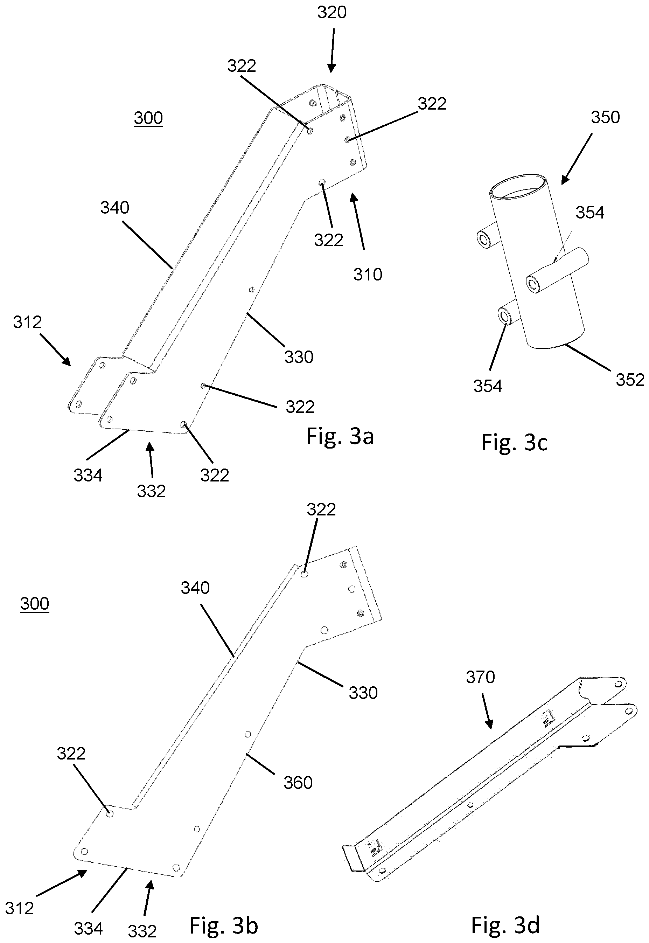

Die Figuren 3a und 3b zeigen Detailzeichnungen der Unterstrebe 300, die bevorzugt aus einem Metallblech gebildet wird. Das Metallblech wird mehrfach abgekantet, sodass zwei parallele Unterstreben-Seitenbleche 330 und ein sie verbindendes Unterstreben-Deckteil 340 gebildet werden. Am freien Ende 310 der Unterstrebe 300 ist das Steuerrohr 320 ausgebildet, das durch Abkanten der Endstücke des freien Endes 310 einen Aufnahmeraum für einen Steuersatz 20 bildet. Optional kann in dem Aufnahmeraum eine Steuermuffe 350 befestigt werden. Die Steuermuffe 350 umfasst bevorzugt ein Muffenrohr 352 und in der hier gezeigten Ausführungsform drei Spannhülsen 354, die an ihrem Ende je ein Innengewinde aufweisen. Das Muffenrohr 352 wird in den Aufnahmeraum am Steuerrohr 320 eingeführt und dort verschraubt. Dazu sind am Steuerrohr 320 drei Verbindungsbohrungen 322 vorgesehen, sodass Schrauben in die Spannhülsen 354 eingreifen können. Die Steuermuffe 350 nimmt dann den Steuersatz 20 des Pedelecs 10 auf. Alternativ und auch bevorzugt sind die Spannhülsen 354 an dem Muffenrohr 352 angeschweißt.

Am gegenüberliegenden Ende 312 der Unterstrebe 300 weisen die Unterstreben-Seitenbleche 330 einen Befestigungsabschnitt 332 auf, sodass zwei im Wesentlichen parallel angeordnete Befestigungsbleche 334 gebildet werden. Die Befestigungsbleche 334 und der Befestigungsabschnitt 332 sind derart ausgebildet, dass sie mit dem Befestigungsbereich 220 der Zentralkomponente 200 korrespondieren. Auf diese Weise kann die Unterstrebe 300 mit der Zentralkomponente 200 starr und lösbar befestigt werden, sodass eine stabile Verbindung der beiden Module (Teile) Zentralkomponente und Unterstrebe erfolgt.

Durch die Ausbildung der Unterstrebe als mehrfach abgewinkeltes Blech mit Unterstreben-Seitenblechen ergibt sich eine nach unten offene Konstruktion. Um die Stabilität der Unterstrebe 300 und insbesondere die Position der beiden Unterstreben-Seitenbleche 330 zueinander zu verbessern, kann im Bereich der Unterseite 360 der Unterstrebe 300 ein Unterstreben-Querverbinder 370 vorgesehen sein. Dieser kann als Hülse, Rohr, Stempel oder Stößel oder in Traversenform ausgebildet sein. Alternativ und bevorzugt ist der Unterstreben-Querverbinder 370 ein abgekantetes Formstück oder ein Blech, das im offenen Bereich mit den Unterstreben-Seitenblechen 330 verbunden ist. Auf diese Weise wird der Abstand der Unterstreben-Seitenbleche 330 auch an deren Unterseite 360 garantiert. Der sich durch den bevorzugt plattenförmig ausgebildeten Unterstreben-Querverbinder 370 ergebende Raum innerhalb der Unterstrebe 300 kann für die Verlegung von Kabeln und/oder elektrischen oder hydraulischen Leitungen oder anderen Drähten verwendet werden.

Figur 3d zeigt eine mögliche Ausführungsform eines Unterstreben-Querverbinders 370, der von unten in die Unterstrebe 300 eingebracht und dort befestigt werden kann.

Die in dem Befestigungsabschnitt 332 gezeigten Verbindungsbohrungen korrespondieren mit den Befestigungselementen 212 der Zentralkomponente 200, sodass eine zuverlässige und robuste Verbindung zwischen Unterstrebe 300 und Zentralkomponente 200 entstehen kann.

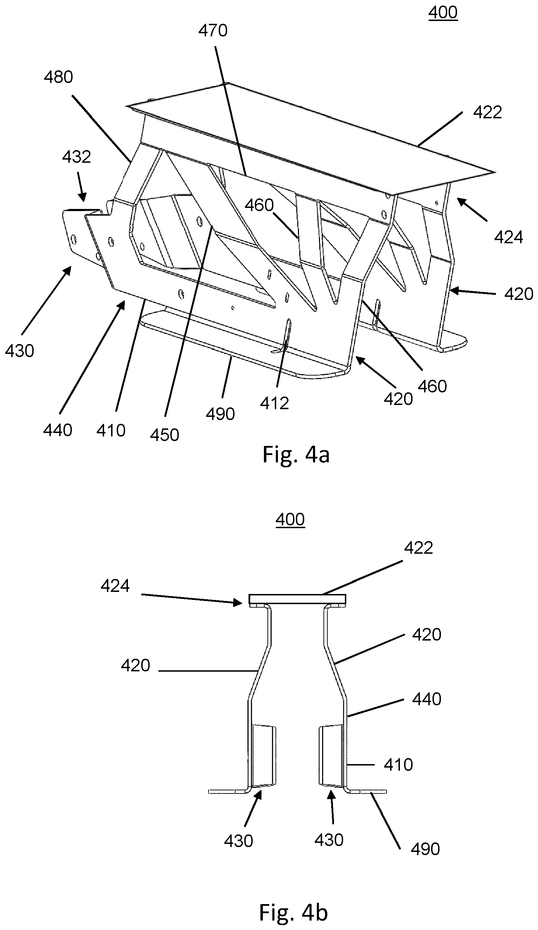

Die Figuren 4a und b zeigen eine Radtraverse 400 in perspektivischer Ansicht bzw. in Draufsicht. Die gezeigte Radtraverse 400 ist einstückig ausgebildet und umfasst zwei Radtraversen-Seitenteile 420, die spiegelbildlich aufgebaut und mit einem Verbindungselement 422 an ihrem oberen Ende 424 verbunden sind. Die Radtraversen-Seitenteile 420 und das Verbindungselement 422 werden aus einem Blech gebildet, das durch mehrfaches Abkanten gebildet wird.

Die Radtraverse 400 bzw. Radtraversen-Seitenteile 420 haben an ihrem freien Ende einen Aufnahmeabschnitt 430, der mit dem Aufnahmebereich 230 der Zentralkomponente 200 derart korrespondiert, dass die Radtraverse 400 mit der Zentralkomponente 200 lösbar und starr verbunden werden kann. An den Aufnahmeabschnitt 430, der einen mit dem Aufweitungsbereich 232 korrespondierenden Aufweitungsabschnitt 432 umfasst, schließt sich ein Strebenabschnitt 440 an.

Der Strebenabschnitt 440 umfasst die Kettenstrebe 410 an seinem unteren Ende und eine im Wesentlichen parallel dazu verlaufende Oberstrebe 470 an seinem oberen Ende. An dem dem Aufnahmeabschnitt 430 gegenüberliegenden Ende erstreckt sich eine V-förmige Heckstrebe 460 zwischen der Kettenstrebe 410 und der Oberstrebe 470, wobei die V-Basis mit der Kettenstrebe 410 einstückig verbunden ist. Eine Sitzstrebe 450 erstreckt sich von der V-Basis der Heckstrebe 460 schräg nach oben zur Oberstrebe 470 in Richtung Aufnahmeabschnitt 430. Eine Frontstrebe 480 erstreckt sich nahe des Aufnahmeabschnitts 430 zwischen der Kettenstrebe 410 und der Oberstrebe 470 und kann an der Oberstrebe mit der Sitzstrebe 450 verbunden sein. Die einzelnen Streben des Strebenabschnitts 440 sind bevorzugt einstückig ausgebildet, sodass insgesamt ein aus einem Blechteil hergestelltes Radtraversen-Seitenteil 420 gebildet wird.

In einer bevorzugten Ausführungsform der Radtraverse 400 verlaufen die Frontstrebe 480 und der hintere Strebenteil der Heckstrebe 460 parallel zueinander. Vorzugsweise verläuft die Frontstrebe parallel zu dem Sitzrohr 270.

Am unteren Ende der Kettenstrebe 410 ist eine Fußstütze 490 vorgesehen, die sich nach außen von der Radtraverse 400 weg erstreckt. Der Winkel zwischen Kettenstrebe 410 und Fußstütze 490 ist (nahezu) 90 Grad. Fußstütze 490 und Kettenstrebe 410 sind ebenfalls einstückig und werden durch Abkantung oder Abwinkelung des Blechteils gebildet. Die Fußstütze 490 kann sich über die ganze Länge oder über einen Teil der Länge der Kettenstrebe 410 erstrecken. Die Fußstütze 490 ist dabei optional und unabhängig von der Gestaltung des restlichen Strebenabschnitts 440.

Die Kettenstrebe 410 hat in ihrem hinteren Bereich, in dem die Sitzstrebe 450 mit der Kettenstrebe 410 verbunden ist, eine Radaufnahme 412, um das Hinterrad 14 bzw. die Achse des Hinterrads 14 aufzunehmen und zu lagern.

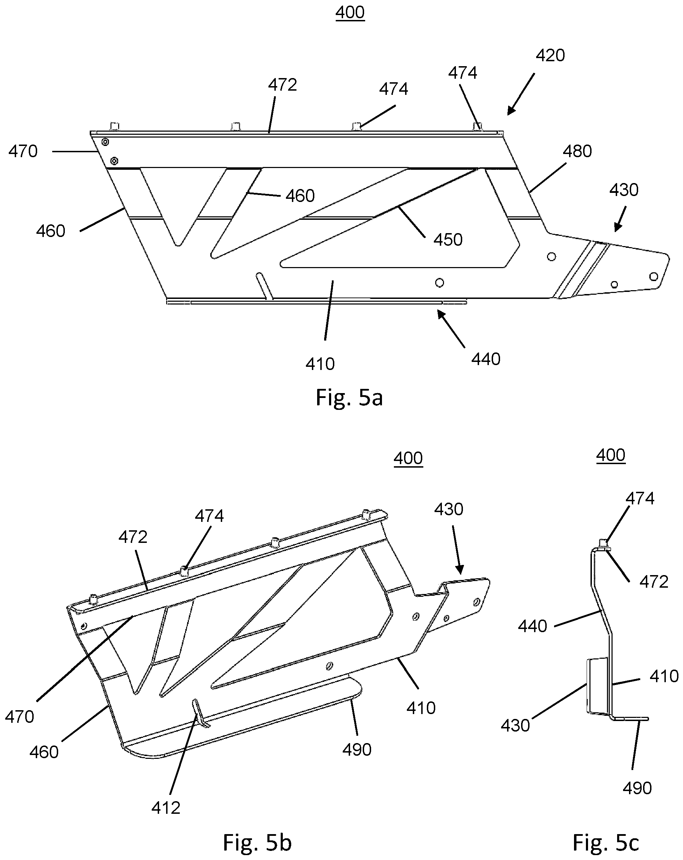

Die Figuren 5a bis 5c zeigen eine alternative Ausführungsform der Radtraverse 400.

Die Radtraverse 400 umfasst in diesem Fall je zwei separate Radtraversen-Seitenteile 420, die einen Aufnahmeabschnitt 430 und einen sich daran anschließenden Strebenabschnitt 440 umfassen. Der Strebenabschnitt 440 umfasst wie oben beschrieben die Kettenstrebe 410 am unteren Ende und die Oberstrebe 470 am oberen Ende. Zwischen Kettenstrebe 410 und Oberstrebe 470 erstreckt sich die Heckstrebe 460, die V-förmig ausgebildet ist und deren V-Öffnung Richtung Oberstrebe 470 weist. In diesem Fall ist die Oberstrebe 470 abgewinkelt und hat ein Oberstrebendach 472, in dem mehrere Oberstrebenverbinder vorgesehen sind, um eine Verbindung mit weiteren Anbauteilen oder eine Querverbindung zu dem benachbarten Radtraversen-Seitenteil 420 herzustellen.

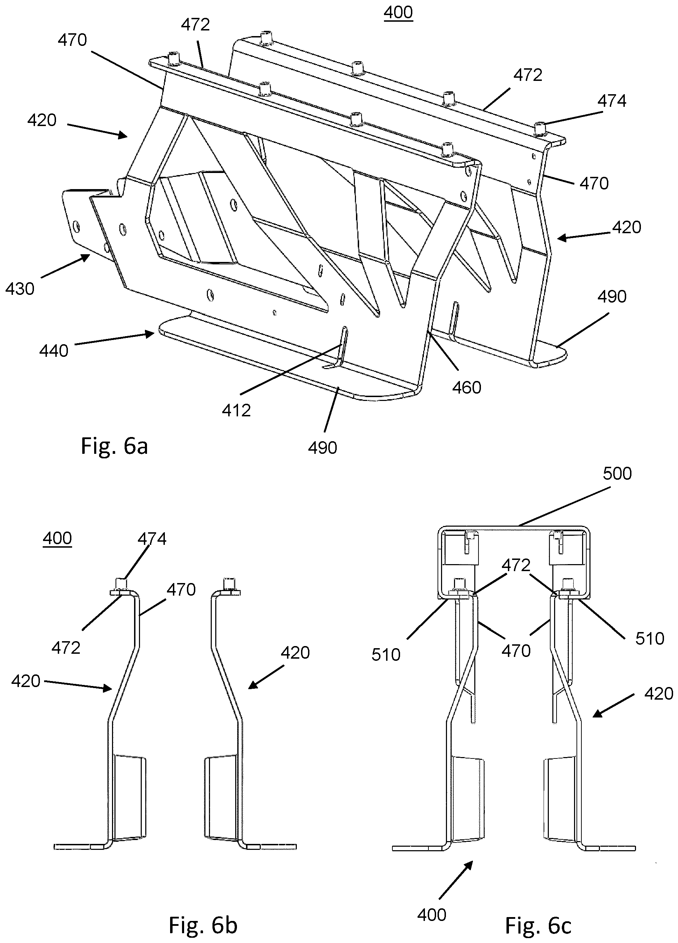

Während die Figuren 5a bis c je ein einzelnes Radtraversen-Seitenteil 420 zeigen, ist in den Figuren 6a bis c die Radtraverse 400 in einer Konstellation gezeigt, wie sie im Fahrradgestell 100 verwendet wird. Sie umfasst zwei Radtraversen-Seitenteile 420, die gemäß Figur 6c miteinander mittels einer Lasttraverse 500 verbunden sind.

Figur 6c ist zu entnehmen, dass die beiden Radtraversen-Seitenteile 420 an ihrem oberen Ende 424 mit einem Carrier oder einer Lasttraverse 500 verbunden sind. Auf diese Weise ist es möglich, die Radtraverse 400 zum Transport von Lasten zu nutzen, die auf der Lasttraverse 500 angeordnet sein können. Die Lasttraverse ist aus einem mehrfach gebogenen Blech hergestellt und hat zwei nach innen gebogene Traversenböden 510, die mit dem Oberstrebendach 472 der Oberstrebe 470 korrespondieren. Die Traversenböden weisen Bohrungen auf, durch die sich die Oberstrebenverbinder 474 beispielsweise hindurch erstrecken können, sodass eine Verbindung zwischen der Lasttraverse 500 und den Radtraversen-Seitenteilen 420 erfolgen kann. Hierdurch wird die Stabilität der Radtraverse 400 erhöht.

In der hier gezeigten Ausführungsform gemäß Figur 6c erstreckt sich der Traversenboden 510 der Lasttraverse 500 unter das Oberstrebendach 472 der Oberstrebe 470. Die Oberstrebenverbinder 474 sind in diesem Fall als Spannhülsen ausgebildet und haben an der Unterseite ein Gewinde, das sich durch eine korrespondierende Bohrung im Oberstrebendach 472 erstreckt. Auf diese Weise lässt sich der Traversenboden 510, der mit einer entsprechenden und korrespondierenden Bohrung versehen ist, mittels Schrauben von unten an das Oberstrebendach 472 anschrauben.

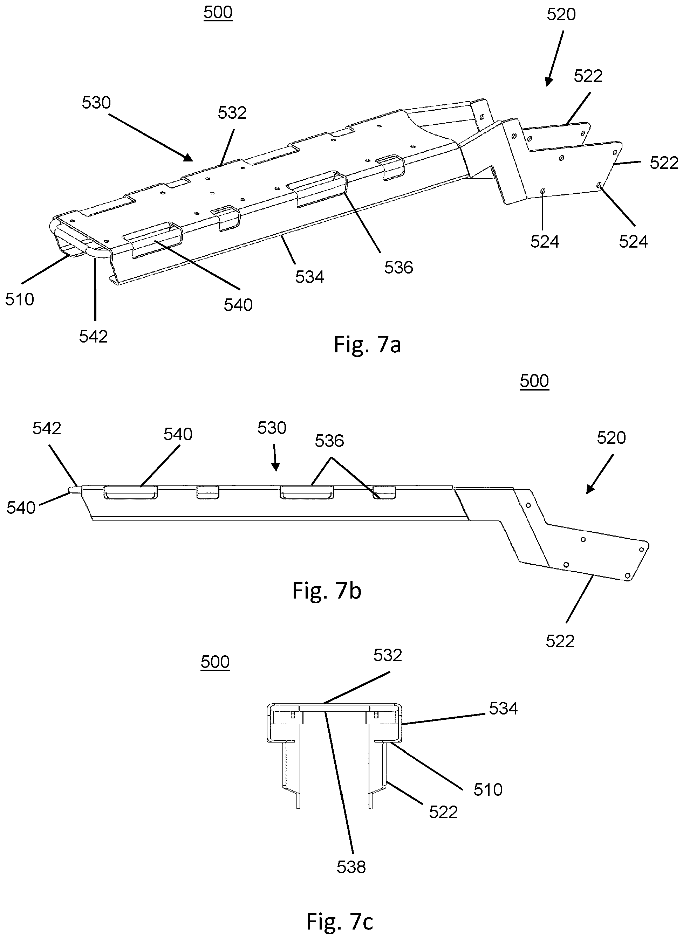

Die Figuren 7a bis 7c zeigen die Lasttraverse 500 (Carrier) in unterschiedlichen Ansichten. Aus Figur 7a ist deutlich zu erkennen, dass die Lasttraverse einstückig aus einem einzigen Blech hergestellt sein kann, das mehrfach abgekantet und abgewinkelt ist. Ein entsprechendes Blech lässt sich einfach herstellen, beispielsweise indem das Blech aus einem vollen Blechstück zunächst in einer entsprechenden Form ausgestanzt wird und dann in einem zweiten Schritt die entsprechenden Abkantungen vorgenommen werden.

Die Lasttraverse 500 umfasst einen Verbindungsabschnitt 520, der zwei korrespondierende und vorzugsweise wenigstens teilweise parallel angeordnete Verbindungsbleche 522 umfasst, um die Lasttraverse 500 mit der Zentralkomponente 200 des Fahrradgestells 100 verbinden zu können. Dazu sind mehrere Bohrungen 524 in den Verbindungsblechen 522 vorgesehen, die mit Befestigungselementen 212 der Zentralkomponente 200 korrespondieren. Die Lasttraverse lässt sich dann beispielsweise an die Zentralkomponente anschrauben.

An den Verbindungsabschnitt 520 schließt sich ein Trägerabschnitt 530 an, in dem das Blech mehrfach entlang einer horizontalen Abkantungslinie abgekantet ist. Somit werden im Trägerabschnitt 530 eine im Wesentlichen horizontal verlaufende Trägerplatte 532, zwei sich von der Trägerplatte nach unten erstreckende Träger-Seitenteile 534 und der Traversenboden 510 gebildet. Die Trägerplatte 532 kann mehrere Bohrungen umfassen, um beispielsweise Lasten oder ein Gurtsystem oder einen Korb befestigen oder anschrauben zu können.

Die Lasttraverse 500 ist im Trägerabschnitt 530 bevorzugt mit wenigstens einer Ausnehmung ausgebildet. In der hier gezeigten Ausführungsform sind mehrere als Aufnahmeöffnung 536 ausgebildete Ausnehmungen im Bereich der oberen Abkantung vorgesehen. Diese Aufnahmeöffnungen 536 sind insbesondere dann vorteilhaft, wenn an einer Unterseite 538 der Trägerplatte 532 ein Aufnahmebügel 540 angeordnet ist. Bevorzugt ist der Aufnahmebügel 540 U-förmig ausgebildet und erstreckt sich parallel zur Trägerplatte 532, bevorzugt derart, dass er die Trägerplatte nach hinten, also an dem dem Verbindungsabschnitt 520 gegenüberliegenden Ende, überragt, sodass bei einem U-förmigen Aufnahmebügel 540 eine U-Basis 542 unter der Trägerplatte 532 hervorragt. Hier können weitere Lasten angeordnet werden. Die Aufnahmeöffnungen 536 in der Trägerplatte 532 ermöglichen den Zugang zum Aufnahmebügel 540, sodass an diesem Lastenbehälter befestigt werden können, beispielsweise Fahrradtaschen. Mittels eines oder mehrerer Adapter können an dem Aufnahmebügel 540 auch Kindersitze oder Lastkörbe oder andere lasttragende Behältnisse einfach und komfortabel und lösbar fixiert werden.

Der Traversenboden 510 kann Bohrungen oder Öffnungen aufweisen, um ein Fixieren und Befestigen an dem Oberstrebendach 472 zu ermöglichen. Bevorzugt korrespondieren die Bohrungen oder Öffnungen dabei mit den Oberstrebenverbindern 474 der Radtraverse 400.

Die Lasttraverse 500 kann so ausgebildet sein, dass der Trägerabschnitt 530 unterschiedliche Längen aufweist, beispielsweise um die Aufnahme größerer oder räumlich ausgedehnter Lasten zu ermöglichen. Dabei kann die Lasttraverse 500 die Radtraverse 400 nach hinten überragen.

Optional kann am hinteren Ende der Trägerplatte 532 an deren Unterseite 538 eine Beleuchtung vorgesehen sein, beispielsweise das Rücklicht des Pedelecs. Eine derartige Anordnung bietet Schutz des Rücklichts vor äußeren Einflüssen durch die beiden Trägerseitenteile 534 und die Trägerplatte 532.

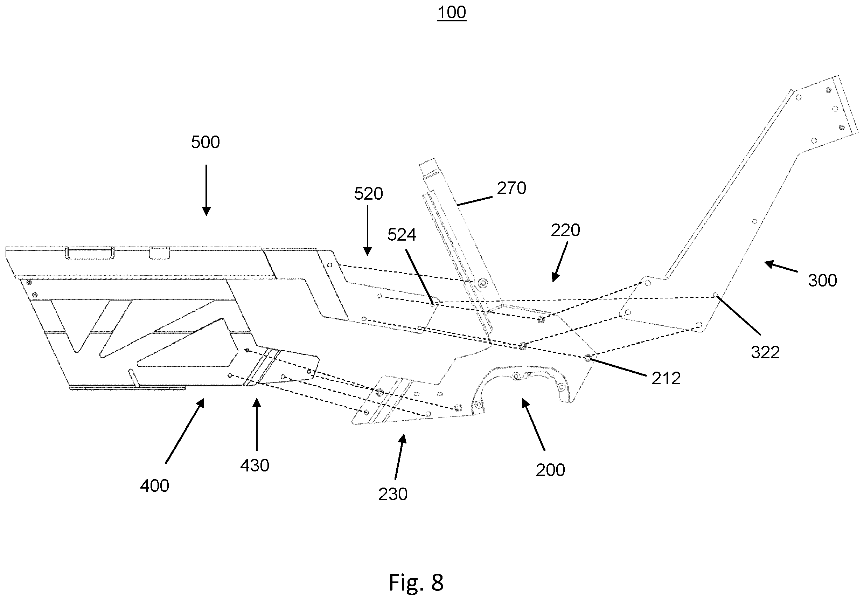

Figur 8 zeigt das erfindungsgemäße Fahrradgestell 100 mit seinen Einzelteilen und Modulen. Zentrales Element (Modul) ist die Zentralkomponente 200, an der die Unterstrebe 300, die Radtraverse 400 und die Lasttraverse 500 befestigt werden. Die Befestigungen sind lösbar, beispielsweise durch Anschrauben mittels Schrauben. Sie führen jedoch zu einer starren Verbindung der Komponenten mit der Zentralkomponente 200.

Die gestrichelten Linien in Figur 8 verdeutlichen, an welchen Punkten die einzelnen Komponenten mit der Zentralkomponente 200 verbunden werden. Die Bohrungen oder Öffnungen in den einzelnen Komponenten korrespondieren mit den Befestigungselementen 212 der Zentralkomponente. Zu erkennen ist, dass die Radtraverse 400 an vier Befestigungselementen 212 mit der Zentralkomponente verbunden, insbesondere verschraubt ist. Die Unterstrebe 300 ist an drei Befestigungselementen 212 im Befestigungsbereich 220 verbunden, beispielsweise angeschraubt. Die Lasttraverse 500 wird zum einen an einem Befestigungselement 212 des Sitzrohrs 270 fixiert sowie mit den drei Befestigungselementen 212 im Befestigungsbereich 220 der Zentralkomponente 200. Hierbei werden die gleichen Befestigungselemente 212 verwendet, an denen auch die Unterstrebe 300 befestigt ist. Eine der Bohrungen 524 im Verbindungsabschnitt 520 korrespondiert mit einer der Verbindungsbohrungen 322 der Unterstrebe, sodass hier eine direkte und ausschließliche Verbindung der Lasttraverse 500 mit der Unterstrebe 300 erfolgt.

Die vorgesehenen Verbindungen der einzelnen Elemente des Fahrradgestells 100 ermöglichen eine derart zuverlässige, robuste und stabile Verbindung, dass das Fahrradgestell 100 oberrohrfrei ausgestaltet sein kann. Auf ein Oberrohr, das eine weitere Verbindung zwischen Unterstrebe und Zentralkomponente ermöglichen würde, wie es bei Diamant-Fahrradrahmen der Fall ist, kann verzichtet werden.

Ein wesentlicher Aspekt, der ebenfalls zur Stabilität des Fahrradgestells 100 beiträgt, ist die Tatsache, dass die Elemente Unterstrebe 300, Radtraverse 400 und Lasttraverse 500 aus Blechen gebildet werden, die bevorzugt einstückig und mehrfach abgekantet sind. Umfasst die Radtraverse 400 zwei Radtraversen-Seitenteile 420, so sind diese bevorzugt aus Blech und einstückig.

Die Zentralkomponente 200 zeichnet sich durch zwei parallele Seitenbleche aus, die mittels Querverbindungen und Querträgern miteinander verbunden, bevorzugt verschweißt, sind. Die Stabilität der Zentralkomponente kann durch den Motorträger sowie durch das Sitzrohr, die beide jeweils bevorzugt ebenfalls mit den Seitenblechen verschweißt sind, weiter erhöht werden. Die Stabilität der anderen Komponenten (Unterstrebe, Radtraverse, Lasttraverse) wird durch die Abkantung und das Umbiegen der Bleche sichergestellt.

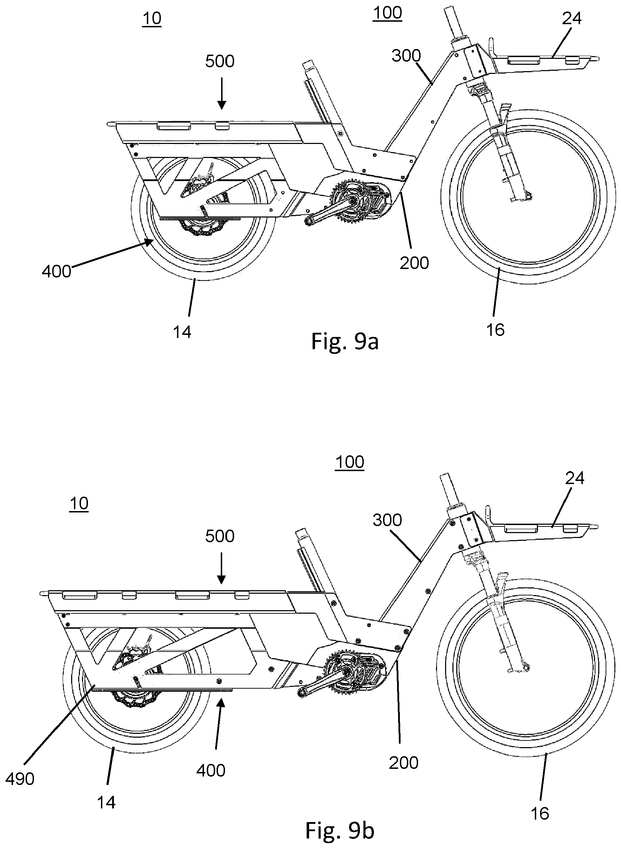

Die Figuren 9a und 9b zeigen zwei unterschiedliche Ausführungsformen eines Pedelecs 10 mit zwei unterschiedlichen Fahrradgestellen 100. In den Figuren sind jeweils Sattel und Sattelstütze sowie Vorbau und Lenker nicht gezeigt, ebenso sind die Speichen der Räder nicht dargestellt.

Während in beiden Ausführungsformen gemäß Figuren 9a und 9b die Zentralkomponente 200 und die Unterstrebe 300 gleich sind, unterscheiden sie sich durch die Länge der Radtraverse und Lasttraverse. Figur 9a zeigt eine kompakte Ausführung des Fahrrads in "Normalform" oder "Kurzform", auch "Shorttail" genannt, während Figur 9b eine Langversion, auch "Longtail" genannt, darstellt. Die Langversion ermöglicht beispielsweise die Aufnahme von zwei hintereinander angeordneten Kindersitzen oder deren direkten Transport, um gleichzeitig zwei Kinder zu transportieren, die ihre Füße auf der Fußstütze 490 abstellen können.

Fahrräder oder Pedelecs weisen einen optionalen Frontgepäckträger 24 auf, der am Steuerrohr der Unterstrebe 300 befestigt werden kann. Der Frontgepäckträger wird ebenfalls aus einem mehrfach abgekanteten Blech hergestellt. An einer Unterseite einer Trägerplatte kann ebenfalls ein Aufnahmebügel vorgesehen sein, der den Frontgepäckträger nach vorne überragen kann. An dem hinteren, der Unterstrebe 300 benachbarten Ende kann der Aufnahmebügel nach oben abgewinkelt oder gebogen sein, um eine Begrenzung des Frontgepäckträgers zu erzielen.

In den hier gezeigten Ausführungsformen der Pedelecs 10 ist das Hinterrad 14 kleiner als das Vorderrad 16. Beispielsweise kann das Hinterrad 14 eine Größe von 20 Zoll aufweisen, während das Vorderrad 16 eine Größe von 24 Zoll oder auch 26 Zoll haben kann. Das im Durchmesser verringerte Hinterrad 14 hat den Vorteil, dass transportierte Kinder bodennäher angeordnet sind und sich somit ein Einstieg oder ein Hineinheben der Kinder erleichtert. Auch Lasten müssen bei einem tiefer angeordneten Trägerabschnitt 530 der Lasttraverse 500 weniger hoch gehoben werden.

Wie den Figuren 9a und 9b zu entnehmen ist, kann auch durch Änderung der Unterstrebe 300 eine geänderte Fahrradkonstellation aufgebaut werden.

Beispielsweise könnte die Neigung der Unterstrebe flacher sein, sodass der Abstand zwischen Lenker und Sattel bzw. zwischen Steuerrohr und Sitzrohr vergrößert wird. Auch lassen sich durch Änderung der Unterstrebe einfach unterschiedliche Fahrradgestellkonstellationen aufbauen, sodass eine individuelle Anpassung an den Fahrer möglich ist. Beispielsweise kann durch einfache Änderung der Unterstrebe ein eher sportliches Fahrradgestell für sportliche Fahrer oder ein eher komfortables Fahrradgestell für Komfort liebende Fahrer erzielt werden.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Zentralkomponente (200) für ein modulares Fahrradgestell (100) für ein Pedelec (10) oder E-Bike und zum Aufnehmen und Halten einer Antriebseinheit (12) mit Motor (26) des Pedelecs (10) umfassend
zwei beabstandete Seitenbleche (210) mit einem Befestigungsbereich (220) zur Befestigung einer Unterstrebe (300), die die Funktion eines Unterrohrs hat und an deren freiem Ende (310) ein Steuerrohr (320) angeordnet ist, und einem Aufnahmebereich (230) zur Aufnahme und zum Befestigen einer Radtraverse (400), an der ein Hinterrad (14) aufgenommen werden kann,
ein Sitzrohr (270), das sich teilweise zwischen die Seitenbleche (210) erstreckt und mit diesen verbunden ist und in dessen oberes Ende (272) eine Sattelstütze einführbar ist,
einen Motorträger (280) zum Tragen der Antriebseinheit (12) des Pedelecs (10),
einen Querverbinder (260), der die beiden Seitenbleche (210) verbindet,
wobei der Querverbinder (260) die Seitenbleche (210) in einem vorgegebenen Abstand zueinander fixiert, und
der Befestigungsbereich (220) und der Aufnahmebereich (230) jeweils Befestigungselemente (212) zum lösbaren, starren Befestigen der Unterstrebe (300) bzw. der Radtraverse (400) aufweisen.

2. Zentralkomponente (200) nach Anspruch 1, **dadurch gekennzeichnet, dass** der Querverbinder (260) im oberen Bereich der Seitenbleche (210) angeordnet ist und bevorzugt ein Deckblech (262) ist, das die Seitenbleche in einem Bereich ihrer Oberseite wenigstens teilweise abdeckt und das bevorzugt mit dem Sitzrohr verbunden ist.

3. Zentralkomponente (200) nach Anspruch 1 oder 2, **dadurch gekennzeichnet, dass** die Zentralkomponente (200) eine Querstrebe (240) im Befestigungsbereich (220) und/oder einen Querträger (250) im Aufnahmebereich (230) aufweist, wobei bevorzugt die Querstrebe (240) und der Querträger (250) die Seitenbleche (210) in einem vorgegebenen Abstand zueinander fixieren.

4. Zentralkomponente (200) nach einem der vorhergehenden Ansprüche, **dadurch gekennzeichnet, dass** ein Batteriehalteelement (290) zum Halten und Befestigen einer Batterie (29) vorhanden ist, das bevorzugt in Form eines Halteblechs (294) ausgebildet ist und/oder das bevorzugt parallel zum Sitzrohr (270) angeordnet und besonders bevorzugt mit dem Sitzrohr (270) verbunden oder verschweißt ist.

5. Zentralkomponente (200) nach einem der vorhergehenden Ansprüche, **dadurch gekennzeichnet, dass** die Seitenbleche (210) im Aufnahmebereich (230) einen Aufweitungsbereich (232) derart aufweisen, dass der Abstand der Seitenbleche (210) im Aufweitungsbereich (232) größer ist als der Abstand im Befestigungsbereich (220).

6. Zentralkomponente (200) nach dem vorhergehenden Anspruch, **dadurch gekennzeichnet, dass** ein Zwischenblech (216) zwischen dem Motorträger (280) und dem Aufweitungsbereich (232) angeordnet ist und sich zwischen den beiden Seitenblechen (210) erstreckt und mit diesen verbunden ist, bevorzugt verschweißt ist, wobei bevorzugt das Zwischenblech (216) zum Halten eines Fahrradständers geeignet und ausgebildet ist.

7. Zentralkomponente (200) nach einem der vorhergehenden Ansprüche, **dadurch gekennzeichnet, dass** der Motorträger (280) die Seitenbleche (210) teilweise an ihrer Unterseite abdeckt und bevorzugt mit den Seitenblechen (210) verschweißt ist.

8. Zentralkomponente (200) nach einem der vorhergehenden Ansprüche, **dadurch gekennzeichnet, dass** die Zentralkomponente (200) aus Metall ist, bevorzugt aus Aluminium, aus Stahl oder aus einer Metalllegierung, und dass bevorzugt die Bleche, insbesondere die Seitenbleche (210), eine Stärke von wenigstens 1,5 mm aufweisen, besonders bevorzugt eine Stärke von wenigstens 2 mm, weiter bevorzugt von wenigstens 2,5 mm, weiter bevorzugt von wenigstens 3 mm, weiter bevorzugt von wenigstens 5 mm, weiter bevorzugt von wenigstens 7 mm, und bevorzugt von höchstens 10 mm, weiter bevorzugt von höchstens 8 mm, besonders bevorzugt von höchstens 6 mm.

9. Modulares Fahrradgestell (100) für ein Pedelec (10) oder E-Bike mit einer Antriebseinheit (12) mit Motor (26), umfassend
eine Zentralkomponente (200) mit zwei beabstandeten Seitenblechen (210), die je einen Befestigungsbereich (220) zur Befestigung einer Unterstrebe und einen Aufnahmebereich (230) zur Aufnahme und zum Befestigen einer Radtraverse (400) aufweisen, mit einem Sitzrohr zur Aufnahme einer Sattelstange für einen Sattel, mit einem Motorträger (280) zur Aufnahme der Antriebseinheit (12) und mit einem Querverbinder (260), einer Querstrebe (240) und einem Querträger (250), die gemeinsam die Seitenbleche (210) in einem vorgegebenen Abstand fixieren, bevorzugt eine Zentralkomponente (200) nach Anspruch 1;
eine Radtraverse (400) zur Aufnahme eines Rads des Pedelecs (10), umfassend einen Aufnahmeabschnitt (430) zum Befestigen an dem Aufnahmebereich (230) der Zentralkomponente (200) und einen sich an den Aufnahmeabschnitt (430) anschließenden Strebenabschnitt (440) mit einer Kettenstrebe (410);
eine Unterstrebe (300) mit einem Steuerrohr (320) am freien Ende (310) zur Halterung eines Steuersatzes (20) für eine Gabel (18) und einen Vorbau;
wobei die Radtraverse (400) lösbar und starr an dem Aufnahmebereich (230) mit der Zentralkomponente (200) verbunden ist und die Unterstrebe (300) lösbar und starr an dem Befestigungsbereich (220) mit der Zentralkomponente (200) verbunden ist.

10. Modulares Fahrradgestell (100) nach dem vorhergehenden Anspruch, **dadurch gekennzeichnet, dass** der Strebenabschnitt (440) der Radtraverse (400) eine Sitzstrebe (450) und eine Heckstrebe (460), die mit der Kettenstrebe (410) verbunden sind, sowie eine Oberstrebe (470) umfasst und die Oberstrebe (470) bevorzugt mit der Sitzstrebe (450) und der Heckstrebe (460) in deren oberem Bereich verbunden ist.

11. Modulares Fahrradgestell (100) nach Anspruch 9, **dadurch gekennzeichnet, dass** der Strebenabschnitt (440) mit Kettenstrebe (410) Teil eines Blechs sind, wobei bevorzugt im Strebenabschnitt (440) wenigstens eine Öffnung oder Ausnehmung vorgesehen ist, sodass bevorzugt mehrere Streben gebildet werden, wobei bevorzugt die Öffnung oder Ausnehmung durch Ausstanzen hergestellt ist.

12. Modulares Fahrradgestell (100) nach einem der Ansprüche 9 bis 11, **dadurch gekennzeichnet, dass** eine Lasttraverse (500) vorgesehen ist, die mit der Zentralkomponente (200) im Befestigungsbereich (220) lösbar und starr verbunden ist und die bevorzugt mit der Radtraverse (400) verbunden ist, besonders bevorzugt mit der Oberstrebe (470) der Radtraverse (400).

13. Unterstrebe (300) für ein modulares Fahrradgestell (100), mit einem Steuerrohr (320) am freien Ende (310) zur Halterung eines Steuersatzes (20) für eine Gabel (18) und einen Vorbau (22), ausgebildet und eingerichtet, um mit einer Zentralkomponente (200) verbunden zu werden, bevorzugt mit einer Zentralkomponente (200) nach Anspruch 1, mit
einem Befestigungsabschnitt (332) mit zwei beabstandeten, im Wesentlichen parallelen Befestigungsblechen (334), der mit einem Befestigungsbereich (220) der Zentralkomponente (200) derart korrespondiert, dass eine starre und lösbare Befestigung der Unterstrebe (300) an der Zentralkomponente (200) ermöglicht wird,
wobei die Unterstrebe (300) ein mehrfach abgekantetes Blech umfasst, das bevorzugt Metall, eine Metalllegierung oder Aluminium umfasst, und derart abgekantet ist, dass zwei Unterstreben-Seitenbleche (330) gebildet werden,
wobei die Unterstrebe (300) an ihrer Unterseite (360) teilweise offen ist.

14. Unterstrebe (300) nach dem vorhergehenden Anspruch, **dadurch gekennzeichnet, dass** die Unterstrebe (300) in ihrem offenen Bereich einen Unterstreben-Querverbinder (370) umfasst, der ausgebildet ist, um die Formstabilität der Unterstrebe (300) zu erhöhen, und der bevorzugt als abgekantetes Formstück im offenen Bereich mit den Unterstreben-Seitenblechen (330) derart verbunden ist, dass der Abstand der Unterstreben-Seitenbleche (330) fixiert ist.

15. Radtraverse (400) für ein modulares Fahrradgestell (100) und zur Lagerung eines Rads des Pedelecs (10), umfassend einen Aufnahmeabschnitt (430) zum Befestigen an einem Aufnahmebereich (230) einer Zentralkomponente (200), bevorzugt einer Zentralkomponente (200) nach Anspruch 1, und einen sich an den Aufnahmeabschnitt (430) anschließenden Strebenabschnitt (440) mit einer Kettenstrebe (410).

16. Radtraverse (400) nach dem vorhergehenden Anspruch, **dadurch gekennzeichnet, dass** der Strebenabschnitt (440) eine Sitzstrebe (450) und eine Heckstrebe (460) umfasst, die bevorzugt miteinander verbunden sind, und eine Oberstrebe (470) hat, wobei die Oberstrebe (470) bevorzugt mit der Sitzstrebe (450) und der Heckstrebe (460) in deren oberem Bereich verbunden ist.

17. Radtraverse (400) nach einem der Ansprüche 15 oder 16, **dadurch gekennzeichnet, dass** die Radtraverse (400) einstückig ausgebildet ist, bevorzugt aus einem mehrfach abgekanteten Metallblech, oder dass die Radtraverse (400) aus zwei korrespondierenden Radtraversen-Seitenteiten (420) gebildet wird, die an ihrem oberen Ende direkt oder unter Zwischenschalten eines Verbindungselements miteinander verbunden sind und die bevorzugt aus einem abgekanteten Metallblech gebildet sind.

18. Lasttraverse (500) für ein modulares Fahrradgestell (100), umfassend einen Verbindungsabschnitt (520) zur lösbaren und starren Befestigung an einen Befestigungsbereich (220) einer Zentralkomponente (200), bevorzugt einer Zentralkomponente (200) nach Anspruch 1, und einen Trägerabschnitt (530) zum Befestigen an einem oberen Ende einer Radtraverse (400), wobei die Lasttraverse (500) aus einem mehrfach abgekanteten Blech gebildet wird und nach unten wenigstens teilweise offen ist.

19. Lasttraverse (500) nach dem vorhergehenden Anspruch, **dadurch gekennzeichnet, dass** im Trägerabschnitt (530) ein Aufnahmebügel (540) vorgesehen ist, der den Trägerabschnitt (530) bevorzugt nach hinten überragt und der an der Unterseite einer Trägerplatte (532) angeordnet ist, wobei die Lasttraverse (500) im Trägerabschnitt (530) im Bereich der Abkantungen wenigstens eine Aufnahmeöffnung (536) derart aufweist, dass der Aufnahmebügel (540) in der Aufnahmeöffnung (536) zugänglich ist.

20. Modulares Fahrrad mit einer elektrischen Antriebseinheit (12) mit Motor (26) und einer Batterie (29), umfassend
ein modulares Fahrradgestell (100), bevorzugt nach Anspruch 9, mit einer Zentralkomponente (200), die die Antriebseinheit (12) trägt, einer Unterstrebe (300), einer Radtraverse (400) und eine Lasttraverse (500),
eine Sattelstange mit Sattel,
eine Gabel (18) und einen Lenker mit Vorbau (22), die mittels eines Steuersatzes (20) mit dem Steuerrohr (320) der Unterstrebe (300) verbunden sind, und zwei Räder.
